Europäisches Patentamt

European Patent Office

Office européen des brevets

(19)

(11) Publication number: **0 047 669**
**B1**

(12) **EUROPEAN PATENT SPECIFICATION**

(45) Date of publication of patent specification: **15.08.84**

(51) Int. Cl.³: **H 04 B 9/00, G 02 B 5/14**

(21) Application number: **81304109.2**

(22) Date of filing: **08.09.81**

(54) Telecommunication systems.

(30) Priority: **08.09.80 GB 8028954**

(43) Date of publication of application:
**17.03.82 Bulletin 82/11**

(45) Publication of the grant of the patent:
**15.08.84 Bulletin 84/33**

(84) Designated Contracting States:
**AT BE CH DE FR GB IT LI LU NL SE**

(56) References cited:
**DE - A - 2 728 686**
**GB - A - 1 479 426**
**GB - A - 1 488 253**
**GB - A - 1 543 035**
**GB - A - 2 019 561**
**US - A - 4 086 484**
**US - A - 4 089 585**

(73) Proprietor: **BICC Public Limited Company**
**21, Bloomsbury Street**
**London, WC1B 3QN (GB)**

(72) Inventor: **Sadler, Alan Arthur**
**2 Eversley Close Frodsham**
**Warrington Cheshire (GB)**
Inventor: **Culshaw, Brian**
**Wood View London Road East**
**Amersham Buckingshamshire HP99DH (GB)**
Inventor: **Ball, Peter Raymond**
**22 Servern Way**
**Garston Hertfordshire (GB)**
Inventor: **Pond, John Charles**
**44 Marlborough Way**
**Ashby de la Zouche Leicestershire LE65NN (GB)**

(74) Representative: **Ross Gower, Edward Lewis et al,**
**BICC plc Patents Department 38 Wood Lane**
**London W12 7DX (GB)**

Courier Press, Leamington Spa, England.

## Description

This invention relates to telecommunication systems and is particularly concerned with telecommunication systems of the kind employing modulated optical signals.

One known form of telecommunication system employing modulated optical signals is described in British Patent Specification No. 1488253 and comprises a highway formed from an optical fibre, a source of coherent electromagnetic radiation of optical frequency, as hereinafter defined, at one end of the highway, a plurality of outstations spaced along the highway, each outstation having associated means for applying a data signal to the highway modulated onto a respective subcarrier and comprising means for periodically varying the optical path length of the highway, and demodulating means connected to the other end of the highway.

The term "electromagnetic radiation of optical frequency" as used herein means visible light and other electromagnetic radiation of adjacent frequency bands which can be handled by the same optical techniques as are used for visible light.

This known form of telecommunication system operates on the principle that an ultrasonic pressure wave when launched across an optical fibre causes a consequent phase modulation of the light within the fibre. Provided that the light is adequately coherent, this phase modulation can be detected at one end of the fibre by using suitable demodulating means. If the ultrasonic wave is a modulated data signal, then a filter at the output end of the fibre centred on the frequency of the modulated data signal will form the basis of a data communications link. By using a range of ultrasonic frequencies, one frequency being unique to each data input, and demodulating means incorporating a plurality of receiver filters, one for each frequency, a data highway accommodating a plurality of data inputs can be assembled.

This data highway concept is a data collection system offering two notable advantages. Firstly, since the ultrasonic modulation technique can be successfully applied to an optical fibre when it constitutes a component element of an optical cable, there is no necessity to break into the cable or fibre to input the data. This simplifies the apparatus at the data input position, makes the optical insertion loss at the position of each data input substantially zero, and also provides flexibility for selection of the data input positions. The second major advantage stems from the fact that the ultrasonic modulation technique is inherently very efficient, and for low bandwidth data transmission, as would be appropriate for many military and industrial process monitoring applications, transmission of the data can be successfully implemented using data input electronics con-

suming less than 1mW of total electric power. This enables a battery-powered modulator to be employed, which is an attractive concept for remote or intrinsically safe environments.

It is an object of the present invention to provide an improved telecommunication system which, in addition to the two important advantages outlined above, provides a simple two-way communications link by means of which data signals from a plurality of data inputs at spaced positions along the highway can be fed in individually in any desired sequence.

According to the present invention the improved telecommunication system comprises a highway formed from an optical fibre; a source of coherent electromagnetic radiation of optical frequency at one end of the highway; a plurality of outstations at spaced positions along the length of the highway, each of which outstations comprises means for modulating a data signal on to a sub-carrier and means for periodically varying the optical path length of a section of the highway with the modulated data signal; and, at the other end of the highway, demodulating means, and is characterised in that each outstation has an associated receiver for signals for controlling operation of the modulating means or ancillary equipment; and in that means for transmitting control signals to the receivers associated with the outstations is provided at the other end of the highway.

Preferably, the source of radiation is a gas laser but a solid state or semi-conductor light source of adequate coherence may be employed.

The control signal transmitting means and the receivers associated with the outstations are preferably electrically interconnected by a pair of electric conductors constituting a leaky electric cable and, in this case, the optical fibre constituting the highway is preferably, but not necessarily, a component element of the cable. For the composite highway and leaky electric cable, it is preferred to employ an optical cable as described and claimed in our British Patent Specification No. 1479426 and comprising an extruded elongate body of plastics insulating material having throughout its length a bore in which an optical fibre is loosely housed, and, embedded in the elongate body on opposite sides of an parallel to the bore, two strain wires of electrically conductive metal or metal alloy.

In one alternative form of composite highway and leaky electric cable, the optical fibre is loosely housed in a bore in an extruded elongate body of plastics insulating material, and embedded in the elongate body on opposite sides of and parallel to the bore are a non-metallic elongate strain member and a pair of coaxial conductors, the outer conductor of which pair of coaxial conductors being of such a form that the pair of conductors constitutes a radiating or leaky cable. It will be appreciated, however, that any convenient form of composite highway and leaky electric cable can be employed.

Alternatively, the control signal transmitting means and the receivers associated with the outstations may constitute components of a broadcasting system, but, in this case, problems of frequency allocation and electromagnetic interference may arise.

Each modulating means preferably takes the form of means for subjecting a length of the optical fibre forming the highway to periodic variations of stress in response to a modulating signal. For this purpose, a piece of piezo electric material may be secured to the optical fibre, or to the cable of which the optical fibre constitutes a component element. Some suitable modulating means for this purpose are described and illustrated in the British Patent Specification No. 1488253 and British Specification Patent Application No. 2019561A.

Where the optical fibre is loosely housed in a bore in the cable and the modulating means of each outstation includes means for subjecting a length of the optical fibre to periodic variations of stress in response to a modulating signal, at the positions of each outstation, preferably the cable is so bent or flexed that the optical fibre is in direct contact with the wall of the bore. Alternatively, at the position of each outstation and preferably throughout the length of the cable, the space in the bore not occupied by the optical fibre is filled with petroleum jelly or other material of a jelly- or grease-like nature. Where the telecommunication system is to be employed in conditions where it is likely to be subjected to poisonous or noxious fluid, filling the bore with a material of a jelly-like nature throughout its length, or at the positions of the outstations, substantially reduces the risk of any poisonous or noxious fluid flowing along the bore of the cable.

The telecommunication system of the present invention has the major advantage that it provides for simple two-way communication between outstations feeding data signals to modulating means and the demodulating means at the control station. Since the control signal transmitting means can be employed automatically or manually to effect operation of the plurality of outstations individually in any desired sequence, each data signal can be modulated by its associated modulator on to a common sub-carrier, thereby enabling a single receiver filter to be incorporated in the demodulating means; alternatively, some or all of the data inputs may be modulated on to two or more than two sub-carriers differing from one another, provided that the appropriate number of receiver filters are incorporated in the demodulating means. Additionally, the telecommunication system of the present invention can be used to provide a means of control of ancillary equipment or voice communication.

The leaky electric cable can be used to monitor for total cable integrity; the light output of the optical fibre provides for monitoring of fibre integrity.

It is possible to employ the telecommunication system of the present invention as a hybrid system, with signals of some of the data input being fed to the control station via the leaky electric cable and the signals of the other data inputs being fed into the optical fibre.

The telecommunication system of the present invention represents a significant development in the concept of optical fibre cable telemetry. A data collection highway based on the use of lower power modulators for the data inputs to the optical fibre has many applications in industrial telemetry and process control, and in military systems. The additional flexibility allowed by the use of two transmission concepts in one cable is even more attractive.

Furthermore, the telecommunication system of the present invention retains the advantages of the known system for intrinsic safety, and the security of data and electromagnetic immunity aspects of optical transmission. The leaky electric cable is, of course, susceptible to electromagnetic interference, and will obviously radiate. However, the data band width can be arranged to be very narrow and the carrier power and frequency can be chosen with electromagnetic interference aspects of a particular application in mind. Electromagnetic interference can be kept to an acceptable low level, and the distance along the leaky electric cable that signals can be transmitted can be increased, by employing such an operating frequency and a leaky electric cable of such a construction that the radiation extends only a few centimetres from the cable. The amount of radio frequency power required to be transmitted through the cable is quite low—in the order of a few milliwatts—so that the originally established intrinsic safety aspects of the optical system are not jeopardised.

The invention is further illustrated by a description, by way of example, of a preferred two-way telecommunication system with reference to the accompanying drawings, in which:—

Figure 1 is a schematic transverse cross-sectional view of a preferred leaky electric cable for use in the telecommunication system, and

Figure 2 is a schematic representation of the telecommunication system, for clarity only one data input station being shown.

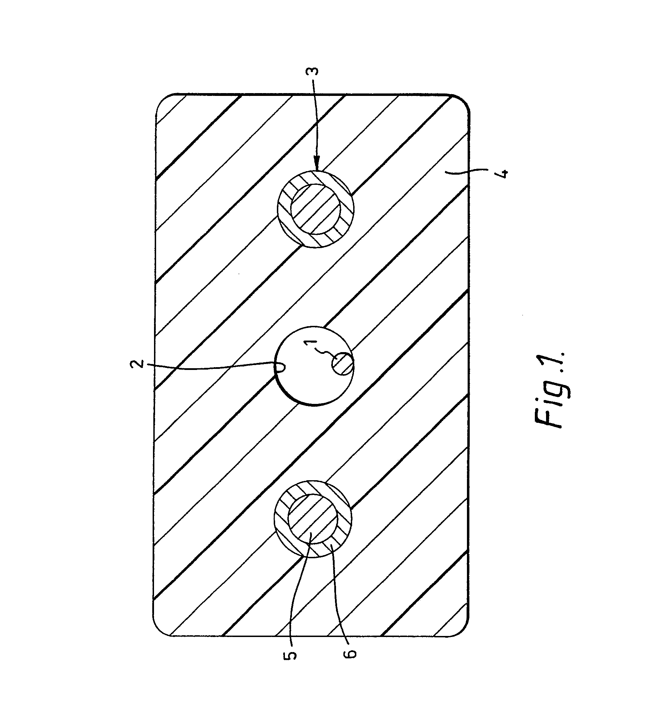

The leaky electric cable shown in Figure 1 comprises an extruded elongate body 4 of polyethylene having a bore 2 and, embedded in the extruded body on opposite sides of the bore, two strain wires 3 so arranged that their axes and the axis of the bore are substantially parallel and lie in a substantially common plane. Each strain wire 3 comprises a core 5 of steel and a cladding 6 of copper. A separate optical fibre 1 is housed loosely in the bore 2.

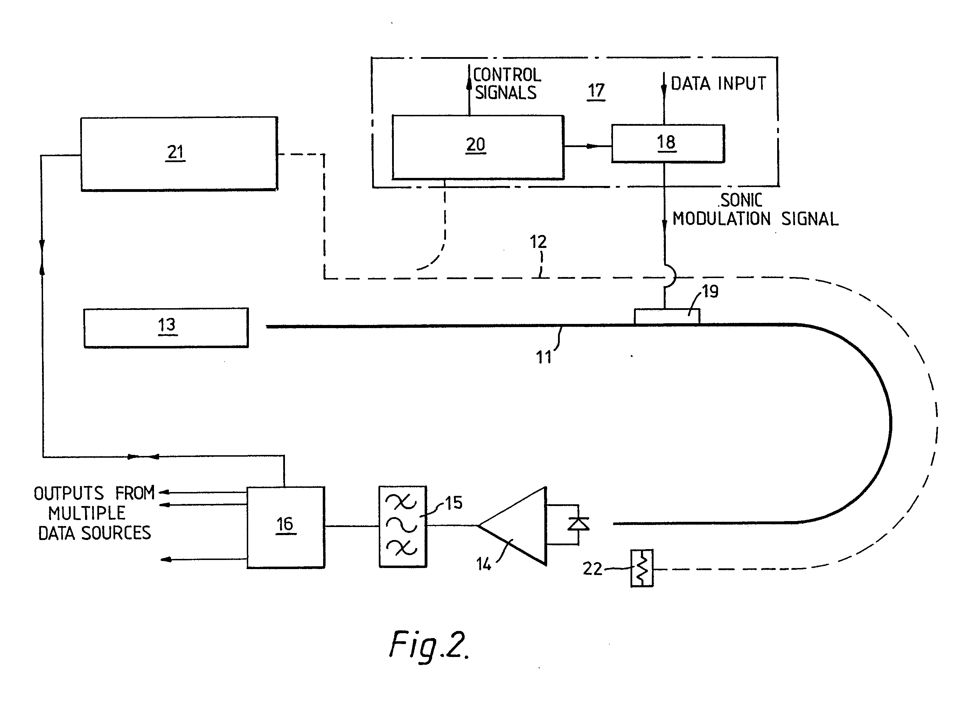

The two-way telecommunication system shown in Figure 2 comprises a highway 11 constituted by the optical fibre 1 of the leaky electric cable shown in Figure 1, the electrically conductive strain wires 3 of the cable constituting a leaky feeder path 12. At one end of the highway 11 is a gas laser 13 which constitutes a source of coherent electromagnetic radiation of optical frequency and, at the other end of the highway, a photodetector 14 feeds a demodulator and demultiplexer 16 via a single filter 15. Associated with the demodulator and demultiplexer 16 is a transmitter 21 which is connected to one end of the leaky feeder path 12, the other end of the leaky feeder path being connected to a matched termination 22. At spaced positions along the length of the highway 11 are a plurality of outstations 17 of which, for clarity, only one is shown. Each outstation 17 comprises a modulator 18 for modulating a data signal onto a sub-carrier and an ultrasonic modulator 19 which is secured to the leaky electric cable and which is employed to vary periodically the optical path length of a section of the highway when the modulated data signal. At the position of each outstation 17, the leaky electric cable is so bent that the optical fibre 1 is in direct contact with the wall of the bore 2 as shown in Figure 1. Each outstation 17 also includes a receiver 20 for signals for controlling operation of the modulator 18 and other ancillary equipment transmitted by the transmitter 21 along the leaky feeder path· 12. Synchronous data to the receivers 20 and outputs for control decisions can be transmitted back and forth between the demodulator and multiplexer 16 and the transmitter 21.

**Claims**

1. A telecommunications system comprising a highway (11) formed from an optical fibre (1); a source (13) of coherent electromagnetic radiation of optical frequency at one end of the highway; a plurality of outstations (17) at spaced positions along the length of the highway, each of which outstations comprises means (18) for modulating a data signal on to a sub-carrier and means (19) for periodically varying the optical path length of a section of the highway with the modulated data signal; and, at the other end of the highway, demodulating means (16), characterised in that each outstation has an associated receiver (20) for signals for controlling operation of the modulating means or ancillary equipment, and in that means (21) for transmitting control signals to the receivers associated with the outstations is provided at the other end of the highway.

2. A telecommunication system comprising a highway (11) formed from an optical fibre (1); a source (13) of coherent electromagnetic radiation of optical frequency at one end of the highway; a plurality of outstations (17) at spaced positions along the length of the highway, each of which outstations comprises means (18) for modulating a data signal on to a sub-carrier and means (19) for periodically varying the optical path length of a section of the highway with the modulated data signal; and, at the other end of the highway, demodulating means (16), characterised in that each outstation has an associated receiver (20) for signals for controlling operation of the modulating means or ancillary equipment; in that means (21) for transmitting control signals to the receivers associated with the outstations is provided at the other end of the highway; and in that a pair of electric conductors constituting a leaky electric cable (12) electrically interconnect the control signal transmitting means and the receivers associated with the outstations.

3. A telecommunication system as claimed in Claim 2, characterised in that the optical fibre (1) constituting the highway is a component element of the leaky electric cable.

4. A telecommunication system as claimed in Claim 3, characterised in that the leaky electric cable comprises an extruded elongate body (4) of plastics insulating material having throughout its length a bore (2) in which an optical fibre (1) is loosely housed, and, embedded in the elongate body on opposite sides of and parallel to the bore, two strain wires (3) of electrically conductive metal or metal alloy.

5. A telecommunication system as claimed in Claim 3, characterised in that the leaky electric cable comprises an extruded elongate body of plastics insulating material having throughout its length a bore in which an optical fibre is loosely housed, and, embedded in the elongate body on opposite sides of and parallel to the bore, a non-metallic elongate strain member and a pair of coaxial conductors, the outer conductor of which pair of coaxial conductors being of such a form that the pair of conductors constitutes a radiating or leaky cable.

6. A telecommunication system as claimed in Claim 4 or 5, characterised in that each modulating means (18) takes the form of means for subjecting a length of the optical fibre forming the highway to periodic variations of stress in response to a modulating signal and in that, at the position of each outstation, the cable is so bent or flexed that the optical fibre is in direct contact with the wall of the bore.

7. A telecommunication system as claimed in Claim 4 or 5, characterised in that each modulating means (18) takes the form of means for subjecting a length of the optical fibre forming the highway to periodic variations of stress in response to a modulating signal and in that, throughout the length of the cable, the space in the bore not occupied by the optical fibre is filled with petroleum jelly or other material of a jelly- or grease-like nature.

8. A telecommunication system as claimed in any one of Claims 1 to 3, characterised in that each modulating means (18) takes the form of means for subjecting a length of the optical fibre forming the highway to periodic variations of stress in response to a modulating signal.

9. A telecommunication system as claimed in any one of Claims 6 to 8, characterised in that each modulating means (18) comprises a piece of piezo electric material secured to the optical fibre or to the cable of which the optical fibre constitutes a component element.

10. A telecommunication system as claimed in any one of the preceding Claims, characterised in that the source (13) of radiation is a gas laser.

## Revendications

1. Système de télécommunications comprenant une ligne (11) de transmission constituée d'une fibre optique (1); une source (13) de rayonnement électromagnétique cohérent de fréquence optique à une extrémité de cette ligne de transmission; une pluralité de postes terminaux (17) espacés le long de la ligne de transmission, chacun de ces postes terminaux comportant un moyen (18) permettant de moduler un signal de données sur une sous-porteuse et un moyen (19) permettant de faire varier périodiquement la longueur du trajet optique d'un tronçon de la ligne de transmission à l'aide du signal modulé de données; et un moyen (16) de démodulation à l'autre extrémité de la ligne de transmission, ce système étant caractérisé en ce que à chaque poste terminal est associé un récepteur (20) des signaux de commande du fonctionnement du moyen de modulation ou d'un équipement auxiliaire; et en ce qu'un moyen (21) pour transmettre des signaux de commande aux récepteurs associés aux postes terminaux est prévu à l'autre extrémité de la ligne de transmission.

2. Système de télécommunications comprenant une ligne (11) de transmission constituée d'une fibre optique (1); une source (13) de rayonnement électromagnétique cohérent de fréquence optique à une extrémité de cette ligne de transmission; une pluralité de postes terminaux (17) espacés le long de la ligne de transmission, chacun de ces postes terminaux comportant un moyen (18) permettant de moduler un signal de données sur une sous-porteuse et un moyen (19) permettant de faire varier périodiquement la longueur du trajet optique d'un tronçon de la ligne de transmission à l'aide du signal modulé de données; et un moyen (16) de démodulation à l'autre extrémité de la ligne de transmission, ce système étant caractérisé en ce que à chaque poste terminal est associé un récepteur (20) des signaux de commande du fonctionnement du moyen de modulation ou d'un équipement auxiliaire; en ce qu'un moyen (21) pour transmettre des signaux de commande aux récepteurs associés aux postes terminaux est prévu à l'autre extrémité de la ligne de transmission; et en ce qu'une paire de conducteurs électriques constituant un câble électrique rayonnant (12) connecte électriquement le moyen de transmission des signaux de commande et les récepteurs associés aux postes terminaux.

3. Système de télécommunications suivant la revendication 2, caractérisé en ce que la fibre optique (1) constituant la ligne de transmission est un élément composant du câble électrique rayonnant.

4. Système de télécommunications suivant la revendication 3, caractérisé en ce que le câble électrique rayonnant comprend un corps allongé extrudé (4) en matière plastique isolante comportant sur toute sa longueur une âme (2) dans laquelle une fibre optique (1) est logée librement et, noyés dans le corps allongé de chaque côté de l'âme et parallèlement à celle-ci, deux fils (3) résistant aux déformations, en métal ou en alliage métallique électriquement conducteur.

5. Système de télécommunications suivant la revendication 3, caractérisé en ce que le câble électrique rayonnant comprend un corps allongé extrudé en matière plastique isolante comportant sur toute sa longueur une âme dans laquelle une fibre optique est logée librement et, noyés dans le corps allongé de chaque côté de l'âme et parallèlement à celle-ci, un élément allongé non métallique résistant aux déformations et une paire de conducteurs coaxiaux, le conducteur extérieur de cette paire de conducteurs coaxiaux ayant une forme telle que la paire de conducteurs coaxiaux constitue un câble rayonnant.

6. Système de télécommunications suivant l'une des revendications 4 ou 5, caractérisé en ce que chaque moyen (18) de modulation se présente sous la forme d'un moyen permettant de soumettre un tronçon de la fibre optique constituant la ligne de transmission, à des variations périodiques de contrainte en réponse à un signal de modulation; et en ce que, à l'emplacement de chaque poste terminal, le câble est courbé ou plié de manière telle que la fibre optique soit en contact direct avec la paroi de l'âme.

7. Système de télécommunications suivant l'une des revendications 4 ou 5, caractérisé en ce que chaque moyen (18) de modulation se présente sous la forme d'un moyen permettant de soumettre un tronçon de la fibre optique constituant la ligne de transmission, à des variations périodiques de contrainte en réponse à un signal de modulation, et en ce, que sur toute la longueur du câble, l'espace dans l'âme qui n'est pas occupé par la fibre optique est rempli de paraffine amorphe ou d'une autre matière de nature gélatineuse ou graisseuse.

8. Système de télécommunications suivant l'une quelconque des revendication 1 à 3 caractérisé en ce que chaque moyen (18) de modulation se présente sous la forme d'un moyen permettant de soumettre un tronçon de la fibre optique constituant la ligne de transmission, à des variations périodiques de contrainte en réponse à un signal de modulation.

9. Système de télécommunications suivant l'une quelconque des revendications 6 à 8, caractérisé en ce que chaque moyen (18) de modulation comprend une pièce de matériau piézoélectrique fixée à la fibre optique ou au câble dont la fibre optique constitue un élément composant.

10. Système de télécommunications suivant l'une quelconque des revendications précédentes, caractérisé en ce que la source (13) de rayonnement est un laser à gaz.

**Patentansprüche**

1. Fernmeldenetz mit eine Multiplexleitung (11) mit einer Lichtleitfaser (1), einer Quelle (13) für kohärente elektromagnetische Strahlung im optischen Frequenzbereich an einem Ende der Multiplexleitung, mehreren Außenstationen (17) an beabstandeten Stellen entlang der Multiplexleitung, wobei jede Außenstation eine Anordnung (18) zum Modulieren eines Datensignals auf einen Hilfsträger und eine Anordnung (19) zum periodischen Ändern der optischen Weglänge eines Stückes der Multiplexleitung mit dem modulierten Datensignal aufweist, und mit einer Demodulatoranordnung (16) am anderen Ende der Multiplexleitung, dadurch gekennzeichnet, daß jede Außenstation einen zugehörigen Empfänger (20) für Signale zum Steuern des Betriebs der Modulatoranordnungen oder Hilfsgeräte aufweist und daß eine Anordnung (21) zum Übertragen der Steuersignale zu den den Außenstationen zugeordneten Empfängern am anderen Ende der Multiplexleitung vorgesehen ist.

2. Fernmeldenetz mit einer Multiplexleitung (11) mit einer Lichtleitfaser (1), einer Quelle (13) für kohärente elektromagnetische Strahlung in optischen Frequenzbereich an einem Ende der Multiplexleitung, mehreren Außenstationen (17) an beabstandeten Stellen entlang der Multiplexleitung, wobei jede Außenstation eine Anordnung (18) zum Modulieren eines Datensignals auf einen Hilfsträger und eine Anordnung (19) zum periodischen Ändern der optischen Weglänge eines Stükkes der Multiplexleitung mit dem modulierten Datensignal aufweist, und mit einer Demodulatoranordnung (16) am anderen Ende der Multiplexleitung, dadurch gekennzeichnet, daß jede Außenstation einen zugehörigen Empfänger (20) für Signale zum Steuern des Betriebs der Modulatoranordnungen oder der Hilfsgeräte aufweist, daß eine Anordnung (21) zum Übertragen der Steuersignale zu den den Außenstationen zugeordneten Empfängern am anderen Ende der Multiplexleitung vorgesehen ist und daß ein elektrisches Leitungspaar bestehend aus einem nicht-abgeschirmten elektrischen Kabel (12) die Steuersignalübertragungsanordnung mit den zu den Außenstationen gehörenden Empfängern elektrisch verbindet.

3. Fernmeldenetz nach Anspruch 2, dadurch gekennzeichnet, daß die die Multiplexleitung bildende Lichtleitfaser (1) ein Teilelement des nicht-abgeschirmten elektrischen Kabels ist.

4. Fernmeldenetz nach Anspruch 3, dadurch gekennzeichnet, daß das nicht-abgeschirmte elektrische Kabel einen extrudierten, längsgestreckten Körper (4) aus Kunststoff-Isoliermaterial mit einer Längsbohrung (2) aufweist, in der eine Lichtleitfaser (1) lose untergebracht ist, und daß, eingebettet in dem längsgestreckten Körper an gegenüberliegenden Seiten und parallel zu der Bohrung, zwei Abspanndrähte (3) aus elektrisch leitendem Metall oder einer Metallegierung vorgesehen sind.

5. Fernmeldenetz nach Anspruch 3, dadurch gekennzeichnet, daß das nicht-abgeschirmte elektrische Kabel einen extrudierten, längsgestreckten Körper aus Kunststoff-Isoliermaterial mit einer Längsbohrung aufweist, in der eine Lichtleitfaser lose untergebracht ist, und daß, eingebettet in den längsgestreckten Körper an gegenüberliegenden Seiten und parallel zu der Bohrung, ein nicht-metallisches längsgestrecktes Spannelement und ein koaxiales Leitungspaar vorgesehen sind, dessen Außenleiter so ausgebildet ist, daß das Leitungspaar ein abstrahlendes oder nicht-abgeschrimtes Kabel darstellt.

6. Fernmeldenetz nach Anspruch 4 oder 5, dadurch gekennzeichnet, daß jede Modulatoranordnung (18) einen Längsabschnitt der die Multiplexleitung bildenden Lichtleitfaser periodischen Änderungen der mechanischen Spannung in Abhängigkeit von einem Modulationssignal aussetzt und daß bei jeder Außenstation das Kabel so gekrümmt oder gebogen ist, daß die Lichtleitfaser in direktem Kontakt mit der Wand der Bohrung steht.

7. Fernmeldenetz nach Anspruch 4 oder 5, dadurch gekennzeichnet, daß jede Modulatoranordnung (18) einen Längsabschnitt der die Multiplexleitung bildenden Lichtleitfaser periodischen Änderungen der mechanischen Spannung in Abhängigkeit von einem Modulationssignal aussetzt, und daß über die gesamte Kabellänge der Freiraum in der Bohrung, der nicht von der Lichtleitfaser ausgefüllt wird, mit Petrolatum oder einem anderen gelee- oder schmiermittelartigen Material gefüllt ist.

8. Fernmeldenetz nach einem der Ansprüche 1 bis 3, dadurch gekennzeichnet, daß jede Modulatoranordnung (18) einen Längsabschnitt der die Multiplexleitung bildenden Lichtleitfaser periodischen Änderungen der mechanischen Spannung in Abhängigkeit von einem Modulationssignal aussetzt.

9. Fernmeldenetz nach einem der Ansprüche 6 bis 8, dadurch gekennzeichnet, daß jede Modulatoranordnung (18) ein Stück eines piezoelektrischen Materials aufweist, das an der Lichtleitfaser oder am Kabel, bei dem die Lichtleitfaser ein Teilelement bildet, befestigt ist.

10. Fernmeldenetz nach einem der vorangehenden Ansprüche, dadurch gekennzeichnet, daß die Strahlungsquelle (13) ein Gaslaser ist.

Fig .1.

Fig.2.